# EUROPEAN PATENT SPECIFICATION

(11) **EP 1 789 493 B1**
(45) Date of publication and mention of the grant of the patent: **16.01.2008**
(21) Application number: 05785061.2
(22) Date of filing: 10.08.2005
(51) Int. Cl.: C08L 67/04, C08G 63/06, C08G 63/08

(54) **ALIPHATIC POLYESTER RESIN COMPOSITIONS AND SHAPED ARTICLES**
ZUSAMMENSETZUNG AUF BASIS VON ALIPHATISCHEM POLYESTERHARZ UND FORMKÖRPER
COMPOSITIONS DE RESINE POLYESTER ALIPHATIQUE ET ARTICLES FORMES AVEC CES COMPOSITIONS

(30) Priority: 31.08.2004 JP 2004253444
(43) Date of publication of application: 30.05.2007
(73) Proprietor: 3M Innovative Properties Company, St. Paul, MN 55133-3427 (US)
(72) Inventor: KOBAYASHI, Mitsuaki, Sagamihara-shi, Kanagawa 229-1185 (JP); KIZUKA, Masako, Tokyo 158-8583 (JP)
(74) Representative: Wilhelm, Stefan
(86) International application number: PCT/US2005/028596
(87) International publication number: WO 2006/026111

(56) References cited:
- EP-A- 0 683 207
- EP-A- 0 765 913
- US-A- 5 756 651
- DATABASE WPI Week 199301 Derwent Publications Ltd., London, GB; AN 1993-003917 XP002358792 & JP 04 331256 A (MITSUI TOATSU CHEMICALS, INCORPORATED) 19 November 1992 (1992-11-19)
- PATENT ABSTRACTS OF JAPAN vol. 016, no. 470 (C-0990), 30 September 1992 (1992-09-30) & JP 04 168149 A (SHIMADZU CORP), 16 June 1992 (1992-06-16)

## Description

### Technical Field

The present invention relates to an aliphatic polyester resin composition capable of forming a shaped article having excellent transparency, flexibility and heat resistance.

### Background Art

Plastics are typically stable chemical compounds and are used in many fields because of their high durability. Plastics provide an original use; however, once the original use is over, disposal of the plastic must be considered. Waste plastics are generally disposed of by landfilling or incineration. In the case of disposal by landfilling, waste plastics can remain undegraded over a long period of time. When incinerated, waste plastics often require an incinerator that can withstand high temperatures. The incinerator may be damaged due to the high temperature required. Moreover, harmful substances such as dioxin can be generated during incineration, which can raise a serious public health problem.

In order to solve these problems, a biodegradable resin capable of degrading into carbon dioxide under the action of microorganisms in soil or water has been proposed. In particular, an aliphatic polyester resin readily undergoes hydrolysis in the presence of water and by virtue of this property, when used as a general-purpose resin, the resin after disposal degrades without contaminating the environment. Also, when used *in vivo* as a medical material, the resin, after fulfilling its purpose, causes little or no effect on the living body and is degraded and absorbed *in vivo.* In this way, the resin is an excellent biodegradable polymer friendly to a living body and therefore, has been used as a material for medical purposes.

However, the above-described aliphatic polyester resin is generally hard, brittle and lacking in flexibility at ordinary temperature. Such properties cause processing problems when attempting to form a film, a filament, a shaped article, or the like. In one shaping method disclosed in Japanese Unexamined Patent Publication (Kokai) No. 2000-26623, an aliphatic polyester resin that contains polylactic acid is shaped by melting the polylactic acid at a temperature higher than its glass transition point (Tg). Also, a method is disclosed in Japanese Unexamined Patent Publication (Kokai) No. 2000-198908, wherein a previously crystallized polylactic acid powder is mixed with a resin mainly comprising a polylactic acid, and then shaped at a temperature higher than the glass transition temperature of the polylactic acid and lower than the melting point of the polylactic acid to impart crystallinity, thereby obtaining a shaped article having flexibility and heat resistance. However, according to these disclosed methods of obtaining a shaped article having flexibility and heat resistance, a crystal powder must be prepared before shaping or a treatment such as stretching must be performed after shaping.

A solution casting method is disclosed, for example, in Japanese Unexamined Patent Publication (Kokai) No. 7-177826. In this shaping method, a composition obtained by mixing a polylactic acid with a property modifier, such as lactic acid oligomer having a polymerization degree of 2 to 10 or triacetylene (glycerin triacetate), is dissolved in a chlorine-based solvent such as chloroform or methylene chloride, a nitrogen-containing solvent such as acetonitrile, dimethylformamide (DMF) or dimethylimidazilidine, or a sulfur-containing solvent such as dimethylsulfoxide (DMSO), and the resulting solution is cast. However, when the solution cast is prepared by using a chlorine-based solvent such as methylene chloride or a nitrogen-containing solvent such as DMF, a product having high transparency or a shaped article having sufficiently high heat resistance cannot be obtained. Also, at least some chlorine-based solvents are carcinogenic, so their use is not preferred.

Furthermore, a method of shaping a porous film from a solution containing a mixture of polylactic acid and, as a property modifier, another aliphatic polyester polymer such as polycaprolactone is disclosed in Japanese Unexamined Patent Publication (Kokai) No. 2002-20530. In this method, the polylactic acid is considered not to dissolve in an organic acid when the ratio of either L-form or D-form polylactic acid is less than 10%. Therefore, the L-form/D-form weight ratio of the disclosed polylactic acid is limited to from 90:10 to 10:90. When a polylactic acid in this range is shaped, a shaped article having a high crystallinity cannot be obtained. As a result, the shaped article cannot have sufficiently high heat resistance and cannot be used in a high-temperature atmosphere of 60°C or more.

In addition, Biomaterials 1992, Vol. 13, No. 4, pp. 217-224 discloses that a shaped article having heat resistance can be obtained by drying a crystalline polylactic acid solution. However, despite the heat resistance, this shaped article has a high modulus of 1 × 10⁹ Pa or more at room temperature and is disadvantageously lacking in flexibility.

### Summary of the Invention

An object of the present invention is to overcome the above-described problems associated with known aliphatic polyester resin compositions and shaped articles made therefrom. The present invention overcomes the above-described problems by providing an aliphatic polyester resin composition and shaped articles made therefrom. The present invention is directed to an aliphatic polyester resin composition capable of being shaped to form a shaped article having high transparency, excellent flexibility and heat resistance.

The aliphatic polyester resin compositions of the present invention comprise (A) a crystalline aliphatic polyester resin having a melting point of 100°C to 180°C that is derived from an asymmetric aliphatic hydroxycarboxylic acid containing at least 90.5 wt% of either a L-form enantiomer or a D-form enantiomer of the acid, (B) at least one plasticizer selected from the group consisting of glycol derivatives, glycerin derivatives, phthalic acid derivatives, adipic acid derivatives, azelaic acid derivatives, sebacic acid derivatives, maleic acid derivatives, fumaric acid derivatives, trimellitic acid derivatives, citric acid derivatives, fatty acid derivatives, sulfonic acid derivatives, phosphoric acid derivatives, paraffin derivatives, diphenyl derivatives, epoxy derivatives and aliphatic polyesters, and (C) a solvent having a boiling point lower than the melting point of the crystalline aliphatic polyester resin and being present in an amount of 10 to 200 parts by weight per 10 parts by weight of the crystalline aliphatic polyester resin and plasticizer combined. The solvent includes a ketone-based solvent.

Shaped article are formed by the above-described aliphatic polyester resin compositions. The shaped article obtained by shaping the above-described aliphatic polyester resin composition has a modulus of 1 × 10⁶ to 1 × 10⁹ Pa at a temperature of 25°C to 100°C as measured in accordance with JIS K-7233-4, and a transparency clouding value of 20% or less as measured in accordance with JIS K-7105.

The present invention is even further directed to a method of forming a shaped article having a modulus of 1×10⁶ to 1×10⁹ Pa at a temperature of 25 °C to 100°C as measured in accordance with JIS K-7233-4, and a transparency clouding value of 20% or less as measured in accordance with JIS K-7105. The method comprises the steps of preparing an aliphatic polyester resin composition comprising: (A) a crystalline aliphatic polyester resin having a melting point of 100°C to 180°C that is derived from an asymmetric aliphatic hydroxycarboxylic acid containing at least 90.5 wt% of a L-form enantiomer or a D-form enantiomer of the acid, (B) a plasticizer selected from the group consisting of glycol derivatives, glycerin derivatives, phthalic acid derivatives, adipic acid derivatives, azelaic acid derivatives, sebacic acid derivatives, maleic acid derivatives, fumaric acid derivatives, trimellitic acid derivatives, citric acid derivatives, fatty acid derivatives, sulfonic acid derivatives, phosphoric acid derivatives, paraffin derivatives, diphenyl derivatives, epoxy derivatives and aliphatic polyesters, and (C) a solvent in which the crystalline aliphatic polyester resin and the plasticizer have solubility, wherein the solvent (1) has a boiling point lower than the melting point of the crystalline aliphatic polyester resin, (2) is present in an amount of 10 to 200 parts by weight per 10 parts by weight of a total weight of the crystalline aliphatic polyester resin and the plasticizer, and (3) comprises a ketone-based solvent and shaping the composition, wherein the shaping step comprises injection molding, extrusion blow molding, extrusion stretch-blow molding, injection blow molding, injection stretch-blow molding, thermal molding, compression molding, inflation molding, T-die molding, or coating the composition onto a substrate and drying the composition.

The practical embodiments of the present invention are described in detail below; however, it would be easily understood by one skilled in the art that the present invention is by no means limited to these embodiments.

### Brief Description of Drawings

FIG. I graphically displays the modulus of shaped articles produced in Examples 1-6 and Comparative Examples 1-4 described below.

### Detailed Description of the Preferred Embodiments

The present invention is directed to aliphatic polyester resin compositions that can be dissolved in a solvent and formed into a shaped article having high crystallinity by selecting a specific combination of a crystalline aliphatic polyester resin, a plasticizer and a solvent having a solubility therefor, even if the composition contains at least 90.5 wt% of either one enantiomer of L-form or D-form of an aliphatic hydroxycarboxylic acid, especially a polylactic acid. The present invention is also directed to shaped articles obtained by shaping the above-described aliphatic polyester resin composition. The shaped articles have a modulus of 1×10⁶ to 1×10⁹ Pa at a temperature of 25°C to 100°C and a transparency of 20% or less in terms of a clouding value.

In order to solve the above-described problems, the present invention provides an aliphatic polyester resin composition comprising a crystalline aliphatic polyester resin, a plasticizer, and a solvent in which the crystalline aliphatic polyester resin and the plasticizer have solubility. More specifically, the crystalline aliphatic polyester resin is a crystalline aliphatic polyester having a melting point of 100°C to 180°C that is derived from an asymmetric aliphatic hydroxycarboxylic acid containing at least 90.5 wt% of L-form enantiomer or D-form enantiomer of the acid. If the content of either one of the enantiomers is less than 90.5 wt%, the crystallinity of the shaped article is low and sufficiently high heat resistance for the shaped article cannot be obtained. In one preferred embodiment, the crystalline aliphatic polyester resin is a polylactic acid.

The molecular weight of the crystalline aliphatic polyester resin is not particularly limited as long as satisfactory mechanical properties are substantially exhibited when shaped into a shaped article such as a container, a film, a sheet and a plate. If the molecular weight is low, the shaped article decreases in strength and the degradation rate increases, whereas if the molecular weight is high, the processability decreases and shaping becomes difficult. By taking account of these factors, the molecular weight of the crystalline aliphatic polyester resin is, as a weight average molecular weight, from 10,000 to 5,000,000, preferably from 30,000 to 3,000,000, more preferably from 50,000 to 2,000,000, still more preferably from 70,000 to 1,000,000, and most preferably from 90,000 to 500,000.

The plasticizer decreases the cohesion of the crystalline aliphatic polyester resin. The plasticizer is at least one member selected from the group consisting of glycol derivatives, glycerin derivatives, phthalic acid derivatives, adipic acid derivatives, azelaic acid derivatives, sebacic acid derivatives, maleic acid derivatives, fumaric acid derivatives, trimellitic acid derivatives, citric acid derivatives, fatty acid derivatives, sulfonic acid derivatives, phosphoric acid derivatives, paraffin derivatives, diphenyl derivatives, epoxy derivatives and aliphatic polyesters. As used herein, the terms "derivative" or "derivatives" usually refer to esters of a given compound. The plasticizer must have a glass transition point of 25°C or less when the plasticizer has a molecular weight, as a weight average molecular weight, of 10,000 to 1,000,000. The plasticizer need not have a specific glass transition point when the plasticizer has a molecular weight, as a weight average molecular weight, of 100 to 1,000.

Suitable examples of glycol derivatives include, but are not limited to, triethylene glycol di-(2-ethylbutylate), triethylene glycol di-(2-ethylhexoate), polyethylene glycol di-(2-ethylhexoate), dibutylmethylene bis-thioglycolate, polyethylene glycol, polyglycol ether and poly(ethylene glycol)dimethyl ether.

Suitable examples of glycerin derivatives include, but are not limited to, glycerol monoacetate, glycerol diacetate, glycerol triacetate, glycerol tributylate, glycerol tripropionate, glycerol ether acetate and glycerol acetic ester.

Suitable examples of phthalic acid derivatives include, but are not limited to, dimethyl phthalate, diethyl phthalate, dibutyl phthalate, diisobutyl phthalate, diamyl phthalate, dihexyl phthalate, butyloctyl phthalate, butylisodecyl phthalate, butyllauryl phthalate, di-(2-ethylhexyl)phthalate, di-n-octyl phthalate, di-2-octyl phthalate, butyl coconut alkyl phthalate, phthalate of higher alcohol by high-pressure reduction of coconut oil, higher alcohol phthalate, mixed alcohol phthalate, linear alcohol phthalate, dilauryl phthalate, diheptyl phthalate, diisooctyl phthalate, octyldecyl phthalate, n-octyl, n-decyl phthalate, diisodecyl phthalate, ditridecyl phthalate, ethylhexyldecyl phthalate, dinonyl phthalate, butylbenzyl phthalate, dicyclohexyl phthalate, diallyl phthalate, alkylallyl phthalate, alkylallyl-modified phthalate, alkyl fatty acid phthalate, n-alkyl fatty acid phthalate, dimethoxyethyl phthalate, dibutoxyethyl phthalate, methylphthalylethyl glycolate, ethylphthalylethyl glycolate, butylphthalylbutyl glycolate and modified phthalate.

Suitable examples of t adipic acid derivatives include, but are not limited to, di-n-butyl adipate, diisobutyl adipate, di-(2-ethylhexyl)adipate, diisooctyl adipate, dicapryl adipate, benzyl-n-butyl adipate, polypropylene adipate, polybutylene adipate, dibutoxyethyl adipate and benzyloctyl adipate.

Suitable examples of azelaic acid derivatives include, but are not limited to, di-(2-ethylhexyl)azelate, diisooctyl azelate, di-2-ethylhexyl-4-thioazelate, di-n-hexyl azelate and diisobutyl azelate.

Suitable examples of sebacic acid derivative include, but are not limited to, dimethyl sebacate, diethyl sebacate, dibutyl sebacate, di-(2-ethylhexyl)sebacate and diisooctyl sebacate.

Suitable examples of maleic acid derivatives include, but are not limited to, di-n-butyl maleate, dimethyl maleate, diethyl maleate, di-(2-ethylhexyl)maleate and dinonyl maleate.

Suitable examples of fumaric acid derivatives include, but are not limited to, dibutyl fumarate and di-(2-ethylhexyl)fumarate.

Suitable examples of trimellitic acid derivatives include, but are not limited to, tri-(2-ethylhexyl)trimellitate, triisodecyl trimellitate, tri(n-octyl)trimellitate, tri(n-decyl)trimellitate, triisooctyl trimellitate and diisooctylmonoisodecyl trimellitate.

Suitable examples of citric acid derivatives include, but are not limited to, triethyl citrate, tri-n-butyl citrate, acetyltriethyl citrate, acetyltri-n-butyl citrate, acetyltri-n-octyl, n-decyl citrate and acetyltri-(2-ethylhexyl)citrate.

Suitable examples of fatty acid derivatives include, but are not limited to, methyl oleate, butyl oleate, methoxyethyl oleate, tetrahydrofurfuryl oleate, glyceryl monooleate, diethylene glycol monooleate, methylacetyl recinolate, butyl acetyl recinolate, glyceryl monorecinolate, diethylene glycol monorecinolate, glyceryl tri-(acetylrecinolate), alkylacetyl recinolate, n-butyl stearate, glyceryl monostearate, diethylene glycol distearate, stabilized pentachloromethyl stearate, chlorinated methyl stearate, chlorinated alkyl stearate, diethylene glycol monolaurate, diethylene glycol dipelargonate, triethylene glycol dipelargonate, butylcellosolve pelargonate and linear fatty acid esters containing a chlorohydrin methyl ether structure.

Suitable examples of sulfonic acids include, but are not limited to, benzenesulfonbutylamide, o-toluenesulfonamide, p-toluenesulfonamide, N-ethyl-p-toluenesulfonamide, o-tolueneethylsulfonamide, p-tolueneethylsulfonamide, N-cyclohexyl-p-toluenesulfonamide, alkylsulfonic acid ester of phenol and cresol, and sulfonamide-formamide.

Suitable examples of phosphoric acid derivatives include, but are not limited to, triethyl phosphate, tributyl phosphate, tri-(2-ethylhexyl)phosphate, triphenyl phosphate, cresyldiphenyl phosphate, tricresyl phosphate, tritolyl phosphate, trixylyl phosphate, phosphate containing up to 1 wt% of orthocresol isomer, alkylallyl phosphate, tris(chloroethyl)phosphate, diphenylmono-o-xenyl phosphate and diphenylxylenyl phosphate.

Suitable examples of paraffin derivatives and diphenyl derivatives include, but are not limited to, chlorinated paraffin, chlorinated diphenyl, chlorinated triphenyl, chlorinated polyphenyl and partially hydrogenated triphenyl.

Suitable examples of epoxy derivatives include, but are not limited to, butyl epoxy stearate, epoxy monoester, octyl epoxy stearate, epoxidized butyl oleate, epoxy fatty acid ester, di-(2-ethylhexyl)4,5-epoxycyclohexane-1,2-carboxylate, epoxidized semi-drying oil, epoxidized fatty acid monoester, epoxidized triglyceride, epoxybutyl stearate, epoxyoctyl stearate, epoxydecyl stearate, epoxidized soybean oil, methyl epoxy hydrostearate, glyceryl tri-(epoxyacetoxystearate), isooctyl epoxy stearate, epoxidized fatty acid, octyl epoxy tallate, butyl epoxy tallate, isooctyl epoxy tallate, isooctyl epoxy stearate and butyl epoxy stearate.

Examples of aliphatic polyesters suitable for use as the plasticizer include, but are not limited to, polycaprolactone, polybutylene succianate and polyethylene succianate.

The amount of plasticizer can vary according to the type of crystalline aliphatic polyester resin. Typically, the amount of plasticizer is from 5 to 100 parts by weight per 100 parts by weight of the crystalline aliphatic polyester resin. If the amount of plasticizer is less than 5 parts by weight, satisfactory flexibility cannot be obtained, whereas if the amount of plasticizer exceeds 100 parts by weight, sufficiently high heat resistance cannot be obtained.

The solvent provides solubility for both the crystalline aliphatic polyester resin and the plasticizer. The solvent has a boiling point lower than the melting point of the crystalline aliphatic polyester resin. The solvent may comprise, for example, as a ketone-based solvent 2-butanone (MEK) and cyclopentanone (CPO), Among these exemplary solvents, 2-butanone, and cyclopentanone, are preferred so as to attain excellent flexibility, heat resistance and transparency. The amount of solvent is from 10 to 200 parts by weight per 10 parts by weight of the total weight of the crystalline aliphatic polyester resin and the plasticizer. If the amount of solvent is less than 10 parts by weight or exceeds 200 parts by weight, satisfactory processing cannot be obtained.

A shaped article can be produced from the aliphatic polyester resin compositions of the present invention by any conventional shaping method such as injection molding, extrusion blow molding, extrusion stretch-blow molding, injection blow molding, injection stretch-blow molding, thermal molding and compression molding. A film-like, sheet-like or plate-like shaped article can be produced by inflation molding, T-die molding and the like. Furthermore, the aliphatic polyester resin compositions of the present invention are in a solution state. A film-like, shaped article can be produced by coating the crystalline aliphatic polyester resin-containing solution onto a substrate and drying the solution. For example, the crystalline aliphatic polyester resin-containing composition may be coated onto a substrate to form a coating thickness of 500 µm and dried in an oven at 100°C for 4 hours to form an aliphatic polyester resin film having a thickness of about 100 µm. The transparency of this film is 20% or less in terms of a clouding value as measured at 25°C by a haze meter, Model TC-HIII manufactured by Tokyo Denshoku Co., Ltd. in accordance with JIS K-7105, and the modulus of the film is from 1x10⁶ to 1×10⁹ Pa at 25°C to 100°C in a tensile mode at 1 Hz as measured by Reometrics RSAII manufactured by Rheometric Science Inc. in accordance with JIS K-7233-4.

When the aliphatic polyester resin composition of the present invention is used, a shaped article having high transparency can be obtained, such as a packaging material enabling the confirmation of contents. Desired coloring can be obtained incorporating a pigment or the like into the aliphatic polyester resin composition. Flexibility and an appropriate modulus can be imparted to the shaped article. Further, the process of forming a thin film, a thin fiber or the like can be simplified while dispensing with a stretching step performed to impart strength in conventional techniques. Also, since the stretching step for imparting strength can be dispensed with and the shaped article has flexibility, processing into a thick sheet (e.g., a doormat), a thick fiber, an expanded material and the like, which are unstretchable, can be performed. Furthermore, by virtue of high transparency and enhanced heat resistance even at a high temperature of 100°C or more, polylactic acid, which has been heretofore limited in use to stationery, packaging material and the like, can be used over a wide range of products, for example, to produce outdoor materials or automobile materials irrespective of the thickness of the film or the shaped article.

The present invention is described below by referring to the Examples, however, needless to say, the present invention is by no means limited thereto.

### Example 1:

A polymer mixture comprising (i) 90 parts by weight of a crystalline polylactic acid (LACTY9031, produced by Shimadzu Corporation, melting point: about 133°C) having a weight average molecular weight of 145,000 and an L-form content of 90.5 wt% to 98 wt%, and (ii) 10 parts by weight of a diglycerol acetic acid ester (RIKEMAL PL710, produced by Riken Vitamin Co., Ltd.) having a percentage acetylation of 50% or more, and which is a liquid at room temperatures (e.g., about 20 °C to about 25 °C), was mixed with (iii) 233 parts by weight of 2-butanone (MEK, produced by Wako Pure Chemical Industries, Ltd., boiling point: 80°C) and stirred at 50°C to obtain an aliphatic polyester resin solution.

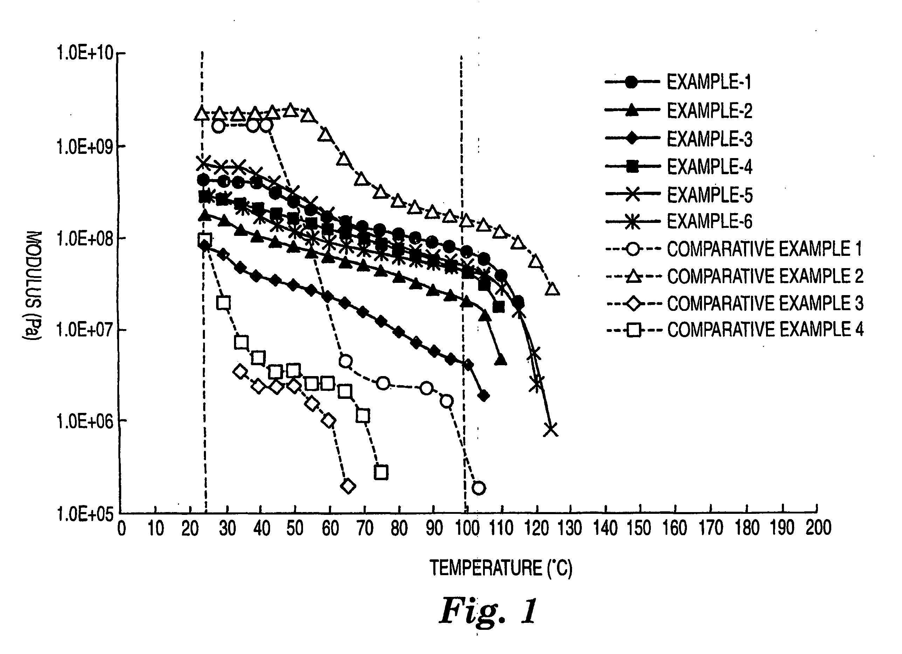

The obtained solution was cast to a coating thickness of 500 µm and left standing in an oven at 100°C for 4 hours. MEK was removed to obtain a film having a film thickness of about 100 µm. The modulus of this film was measured at a temperature ranging from 25°C to 150°C by using Reometrics RSAII manufactured by Rheometric Science Inc. in a tensile mode at a frequency of 1 Hz in accordance with JIS K-7233-4. FIG. 1 shows the results obtained. Also, the clouding value was measured at 25°C by a haze meter, Model TC-HIII manufactured by Tokyo Denshoku Co., Ltd. in accordance with JIS K-7105, and was found to be 3.0%.

### Example 2:

A film was shaped in the same manner as described in Example 1 except the polymer mixture contained 75 parts by weight of crystalline polylactic acid and 25 parts by weight of diglycerol acetic acid ester. The modulus was measured as described in Example 1. FIG. 1 shows the results obtained. The clouding value was measured as described in Example 1 and was found to be 2.5%.

### Example 3:

A film was shaped in the same manner as described in Example 1 except the polymer mixture contained 60 parts by weight of crystalline polylactic acid and 25 parts by weight of diglycerol acetic acid ester. The modulus was measured as described in Example 1. FIG. 1 shows the results obtained. The clouding value was measured as described in Example 1 and was found to be 2.2%.

### Example 4:

A film was shaped in the same manner as described in Example 2 except poly(ethylene glycol)dimethyl ether (produced by Aldrich, number average molecular weight Mn = 100, melting point: 42°C) was substituted for the diglycerol acetic acid ester. The modulus was measured as described in Example 1. FIG. 1 shows the results obtained. The clouding value was measured as described in Example 1 and was found to be 4.6%.

### Example 5:

A film was shaped in the same manner as described in Example 2 except polycaprolactonediol (PLACCEL 205, produced by Daicel Chemical Industries, Ltd., molecular weight: 500), which is a polycaprolactone derivative, was substituted for the diglycerol acetic acid ester. The modulus was measured as described in Example 1. FIG. 1 shows the results obtained. The clouding value was measured as described in Example 1 and was found to be 9.6%.

### Example 6:

A film was shaped in the same manner as described in Example 2 except cyclopentanone (produced by Wako Pure Chemical Industries, Ltd., boiling point: 131 °C) was substituted for the 2-butanone. The mixture was stirred at room temperature. The modulus was measured as described in Example 1. FIG. 1 shows the results obtained. The clouding value was measured as described in Example 1 and was found to be 16%.

### Comparative Example 1:

The crystalline polylactic acid used in Example 1 was melted at 150°C and shaped into a film. The modulus was measured as described in Example 1. FIG. 1 shows the results obtained. The shaped article had neither flexibility at room temperature nor heat resistance.

### Comparative Example 2:

A solution was prepared by adding 70 parts by weight of 2-butanol to 30 parts by weight of the crystalline polylactic acid used in Example 1. The solution was shaped into a film in the same manner as described in Example 1. The modulus was measured as described in Example 1. FIG. 1 shows the results obtained. The shaped article had high heat resistance, but failed to have flexibility at low temperature.

### Comparative Example 3:

A film was shaped in the same manner as described in Example 2 except non-crystalline polylactic acid having an L-form content of 50 to 60 wt% (LACTY9800, produced by Shimadzu Corporation) was substituted for the crystalline polylactic acid. The modulus was measured as described in Example 1. FIG. 1 shows the results obtained. This shaped article had high flexibility at low temperature, but failed to have sufficiently high heat resistance.

### Comparative Example 4:

A film was shaped in the same manner as described in Example 2 except 1-methyl-2-pyrrolidone (produced by Wako Pure Chemical Industries, Ltd., boiling point: 202°C) was substituted for the 2-butanone. The mixture was stirred at room temperature. The modulus was measured as described in Example 1. FIG. 1 shows the results obtained.

### Comparative Example 5:

A resin solution was prepared in the same manner as described in Example 2 except dichloromethane (produced by Wako Pure Chemical Industries, Ltd., boiling point: 40°C) was substituted for the 2-butanone. The mixture was stirred at room temperature. The resulting resin solution was cast to a coating thickness of 500 µm, dried in an oven at 40°C for 1 hour, and left standing in an oven at 100°C for 4 hours to remove dichloromethane. The resulting film had a film thickness of about 100 µm. The clouding value was measured as described in Example 1 and was found to be 69%.

### Comparative Example 6:

A film was shaped in the same manner as described in Example 2 except 1,2-dichloroethane (produced by Wako Pure Chemical Industries, Ltd., boiling point: 84°C) was substituted for the 2-butanone. The mixture was stirred at room temperature. The clouding value was measured as described in Example I and was found to be 66%.

### Comparative Example 7:

A film was shaped in the same manner as described in Example 2 except N,N-dimethylformamide (produced by Wako Pure Chemical Industries, Ltd., boiling point: 153°C) was substituted for the 2-butanone. The mixture was stirred at room temperature. The clouding value was measured as described in Example 1 and was found to be 42%.

### Comparative Example 8:

A resin solution was prepared in the same manner as described in Example 4 except dichloromethane (produced by Wako Pure Chemical Industries, Ltd., boiling point: 40°C) was substituted for the 2-butanone. The mixture was stirred at room temperature. The resulting resin solution was cast to a coating thickness of 500 µm, dried in an oven at 40°C for 1 hour, and left standing in an oven at 100°C for 4 hours to remove dichloromethane. The resulting film had a film thickness of about 100 µm. The clouding value was measured as described in Example 1 and was found to be 86%. A shaped article having high transparency was not obtained from a resin solution using a chlorine-based solvent, that is, a dichloromethane solution of crystalline polylactic acid.

### Examples 1-6 and Comparative Examples 1-8 Data

The flexibility, heat resistance and clouding point data of each shaped article obtained in Examples 1-6 and Comparative Examples 1-8 are shown in Table 1 below.

**Table 1. Flexibility, Heat Resistance and Transparency Data**

| | Aliphatic polyester resin | Component (B) | Solution | Flexibility | Heat Resistance | Transparency (clouding value) |
|---|---|---|---|---|---|---|
| Example 1 | 9031 | PL710 | MEK | OK | OK | OK (3.0%) |
| Example 2 | 9031 | PL710 | MEK | OK | OK | OK (2.5%) |
| Example 3 | 9031 | PL710 | MEK | OK | OK | OK (2.2%) |
| Example 4 | 9031 | PEGdME | MEK | OK | OK | OK (4.7%) |
| Example 5 | 9031 | PCL | MEK | OK | OK | OK (9.6%) |
| Example 6 | 9031 | PL710 | CPO | OK | OK | OK (16%) |
| Comparative Example 1 | 9031 | none | none | NG | NG | OK (<20%) |
| Comparative Example 2 | 9031 | none | MEK | NG | OK | OK (<20%) |
| Comparative Example 3 | 9800 | PL710 | MEK | OK | NG | OK (<20%) |
| Comparative Example 4 | 9031 | PL710 | NMP | OK | NG | OK(<20%) |
| Comparative Example 5 | 9031 | PL710 | dCIM | OK | OK | NG (69%) |
| Comparative Example 6 | 9031 | PL710 | dClE | OK | OK | NG (66%) |
| Comparative Example 7 | 9031 | PL710 | DMF | OK | OK | NG (42%) |
| Comparative Example 8 | 9031 | PCL | dCIM | OK | OK | NG (86%) |

| | | | | | | |
|---|---|---|---|---|---|---|
| In the Table, 9031: crystalline polylactic acid LACTY9031 (produced by Shimadzu Corporation, L-form content: 90.5 to 98 wt%) 9800: crystalline polylactic acid LACTY9800 (produced by Shimadzu Corporation, L-form content: 75 to 60 wt%) PL710: diglycerol acetic acid ester PEGdME: poly(ethylene glycol)dimethyl ether PCL: polycaprolactone MEK: 2-butanone dClM: dichloromethane dClE: dichloroethane CPO: cyclopentanone DO: dioxane DMF: N,N-dimethylformamide NMP: 1-methyl-2-pyrrolidone Flexibility: OK means the modulus being 1×10⁹ Pa or less at 25°C or more; and NG means the modulus being less than 1×10⁹ Pa. Heat resistance: OK means the modulus being 1x10⁶ Pa or more at 100°C or less; and NG means the modulus being less than 1x10⁶ Pa. | | | | | | |

## Claims

1. An aliphatic polyester resin composition comprising:
(A) a crystalline aliphatic polyester resin having a melting point of 100°C to 180°C that is derived from an asymmetric aliphatic hydroxycarboxylic acid containing at least 90.5 wt% of a L-form enantiomer or a D-form enantiomer of the acid,
(B) a plasticizer selected from the group consisting of glycol derivatives, glycerin derivatives, phthalic acid derivatives, adipic acid derivatives, azelaic acid derivatives, sebacic acid derivatives, maleic acid derivatives, fumaric acid derivatives, trimellitic acid derivatives, citric acid derivatives, fatty acid derivatives, sulfonic acid derivatives, phosphoric acid derivatives, paraffin derivatives, diphenyl derivatives, epoxy derivatives and aliphatic polyesters, and
(C) a solvent in which the crystalline aliphatic polyester resin and the plasticizer have solubility, wherein the solvent (1) has a boiling point lower than the melting point of the crystalline aliphatic polyester resin, (2) is present in an amount of 10 to 200 parts by weight per 10 parts by weight of a total weight of the crystalline aliphatic polyester resin and the plasticizer, and (3) comprises a ketone-based solvent, wherein the aliphatic polyester resin composition is in a solution state.

2. The aliphatic polyester resin composition of claim 1, wherein the crystalline aliphatic polyester resin is a polylactic acid.

3. The aliphatic polyester resin composition of claim 1, wherein the plasticizer has a glass transition point of 25°C or less and a molecular weight of 10,000 to 1,000,000.

4. The aliphatic polyester resin composition of claim 1, wherein the plasticizer has a molecular weight of 100 to 1,000.

5. The aliphatic polyester resin composition of claim 1, wherein the plasticizer is present in an amount of from 5 to 100 parts by weight per 100 parts by weight of the crystalline aliphatic polyester resin.

6. The aliphatic polyester resin composition of claim 1, wherein the solvent is 2-butanone or cyclopentanone.

7. The aliphatic polyester resin composition of claim 1, wherein the crystalline aliphatic polyester resin has a weight average molecular weight of from 90,000 to 500,000.

8. A method of forming a shaped article having a modulus of 1×10⁶ to 1×10⁹ Pa at a temperature of 25°C to 100°C as measured in accordance with JIS K-7233-4, and a transparency clouding value of 20% or less as measured in accordance with JIS K-7105, said method comprising the steps of:
preparing an aliphatic polyester resin composition comprising:
(A) a crystalline aliphatic polyester resin having a melting point of 100°C to 180°C that is derived from an asymmetric aliphatic hydroxycarboxylic acid containing at least 90.5 wt% of a L-form enantiomer or a D-form enantiomer of the acid,
(B) a plasticizer selected from the group consisting of glycol derivatives, glycerin derivatives, phthalic acid derivatives, adipic acid derivatives, azelaic acid derivatives, sebacic acid derivatives, maleic acid derivatives, fumaric acid derivatives, trimellitic acid derivatives, citric acid derivatives, fatty acid derivatives, sulfonic acid derivatives, phosphoric acid derivatives, paraffin derivatives, diphenyl derivatives, epoxy derivatives and aliphatic polyesters, and
(C) a solvent in which the crystalline aliphatic polyester resin and the plasticizer have solubility, wherein the solvent (1) has a boiling point lower than the melting point of the crystalline aliphatic polyester resin, (2) is present in an amount of 10 to 200 parts by weight per 10 parts by weight of a total weight of the crystalline aliphatic polyester resin and the plasticizer, and (3) comprises a ketone-based solvent; and
shaping the composition, wherein the shaping step comprises injection molding, extrusion blow molding, extrusion stretch-blow molding, injection blow molding, injection stretch-blow molding, thermal molding, compression molding, inflation molding, T-die molding, or coating the composition onto a substrate and drying the solution.

9. The method of claim 8, wherein the shaping step comprises removing at least a portion of the solvent by drying the composition.

10. The method of claim 8, wherein the shaping step comprises an extrusion step.

## Patentansprüche

1. Aliphatische Polyesterharzzusammensetzung, umfassend:
(A) ein kristallines aliphatisches Polyesterharz, das einen Schmelzpunkt von 100 °C bis 180 °C aufweist und von einer asymmetrischen aliphatischen Hydroxycarbonsäure deriviert ist, die mindestens 90,5 Gew.-% eines L-Form-Enantiomers oder eines D-Form-Enantiomers der Säure enthält,
(B) einen Weichmacher ausgewählt aus der Gruppe bestehend aus Glykolderivaten, Glycerinderivaten, Phthalsäurederivaten, Adipinsäurederivaten, Azelainsäurederivaten, Sebacinsäurederivaten, Maleinsäurederivaten, Fumarsäurederivaten, Trimellitsäurederivaten, Citronensäurederivaten, Fettsäurederivaten, Sulfonsäurederivaten, Phosphorsäurederivaten, Paraffinderivaten, Diphenylderivaten, Epoxyderivaten und aliphatischen Polyestern und
(C) ein Lösungsmittel, in dem das kristalline aliphatische Polyesterharz und der Weichmacher Löslichkeit aufweisen, wobei das Lösungsmittel (1) einen Siedepunkt aufweist, der niedriger liegt als der Schmelzpunkt des kristallinen aliphatischen Polyesterharzes, (2) in einer Menge von 10 bis 200 Gewichtsteilen pro 10 Gewichtsteile eines Gesamtgewichts des kristallinen aliphatischen Polyesterharzes und Weichmachers vorliegt und (3) ein Lösungsmittel auf Ketonbasis umfasst, wobei die aliphatische Polyesterharzzusammensetzung sich in einem Lösungszustand befindet.

2. Aliphatische Polyesterharzzusammensetzung nach Anspruch 1, wobei das kristalline aliphatische Polyesterharz eine Polymilchsäure ist.

3. Aliphatische Polyesterharzzusammensetzung nach Anspruch 1, wobei der Weichmacher einen Glasübergangspunkt von 25 °C oder weniger und eine Molmasse von 10.000 bis 1.000.000 aufweist.

4. Aliphatische Polyesterharzzusammensetzung nach Anspruch 1, wobei der Weichmacher eine Molmasse von 100 bis 1.000 aufweist.

5. Aliphatische Polyesterharzzusammensetzung nach Anspruch 1, wobei der Weichmacher in einer Menge von 5 bis 100 Gewichtsteilen pro 100 Gewichtsteile des kristallinen aliphatischen Polyesterharzes vorliegt.

6. Aliphatische Polyesterharzzusammensetzung nach Anspruch 1, wobei das Lösungsmittel 2-Butanon oder Cyclopentanon ist.

7. Aliphatische Polyesterharzzusammensetzung nach Anspruch 1, wobei das kristalline aliphatische Polyesterharz eine gewichtsdurchschnittliche Molmasse von 90.000 bis 500.000 aufweist.

8. Verfahren zum Bilden eines geformten Gegenstands mit einem Modul von 1 x 10⁶ bis 1 x 10⁹ Pa bei einer Temperatur von 25 °C bis 100 °C, wie JIS K-7233-4 gemäß gemessen, und einem Transparenztrübungswert von 20 % oder weniger, wie JIS K-7105 gemäß gemessen, wobei das Verfahren folgende Schritte umfasst:
Herstellen einer aliphatischen Polyesterharzzusammensetzung, umfassend:
(A) ein kristallines aliphatisches Polyesterharz, das einen Schmelzpunkt von 100 °C bis 180 °C aufweist und von einer asymmetrischen aliphatischen Hydroxycarbonsäure deriviert ist, die mindestens 90,5 Gew.-% eines L-Form-Enantiomers oder eines D-Form-Enantiomers der Säure enthält,
(B) einen Weichmacher ausgewählt aus der Gruppe bestehend aus Glykolderivaten, Glycerinderivaten, Phthalsäurederivaten, Adipinsäurederivaten, Azelainsäurederivaten, Sebacinsäurederivaten, Maleinsäurederivaten, Fumarsäurederivaten, Trimellitsäurederivaten, Citronensäurederivaten, Fettsäurederivaten, Sulfonsäurederivaten, Phosphorsäurederivaten, Paraffinderivaten, Diphenylderivaten, Epoxyderivaten und aliphatischen Polyestern und
(C) ein Lösungsmittel, in dem das kristalline aliphatische Polyesterharz und der Weichmacher Löslichkeit aufweisen, wobei das Lösungsmittel (1) einen Siedepunkt aufweist, der niedriger liegt als der Schmelzpunkt des kristallinen aliphatischen Polyesterharzes, (2) in einer Menge von 10 bis 200 Gewichtsteilen pro 10 Gewichtsteile eines Gesamtgewichts des kristallinen aliphatischen Polyesterharzes und Weichmachers vorliegt und (3) ein Lösungsmittel auf Ketonbasis umfasst; und
Formen der Zusammensetzung, wobei der Formungsschritt das Spritzgießen, Extrusionsblasformen, Extrusionsstreckblasformen, Spritzblasformen, Spritzstreckblasformen, thermische Formen, Formpressen, Aufblasformen, T-Düsenformen oder schichtförmige Aufbringen der Zusammensetzung auf ein Substrat und Trocknen der Lösung umfasst.

9. Verfahren nach Anspruch 8, wobei der Formungsschritt das Entfernen mindestens eines Teils des Lösungsmittels durch Trocknen der Zusammensetzung umfasst.

10. Verfahren nach Anspruch 8, wobei der Verformungsschritt einen Extrusionsschritt umfasst.

## Revendications

1. Composition de résine polyester aliphatique comprenant :
(A)une résine polyester aliphatique cristalline possédant un point de fusion de 100°C à 180°C, qui est dérivée d'un acide hydroxycarboxylique aliphatique asymétrique contenant au moins 90,5% en poids d'un énantiomère de forme L ou d'un énantiomère de forme D de l'acide,
(B)un plastifiant choisi dans le groupe constitué par les dérivés de glycol, les dérivés de glycérine, les dérivés d'acide phtalique, les dérivés d'acide adipique, les dérivés d'acide azélaïque, les dérivés d'acide sébacique, les dérivés d'acide maléique, les dérivés d'acide fumarique, les dérivés d'acide tri-mellitique, les dérivés d'acide citrique, les dérivés d'acide gras, les dérivés d'acide sulfonique, les dérivés d'acide phosphorique, les dérivés de paraffine, les dérivés de diphényle, les dérivés d'époxy et les polyesters aliphatiques, et
(C)un solvant dans lequel la résine polyester aliphatique cristalline et le plastifiant présentent une solubilité, le solvant (1) possédant un point d'ébullition inférieur au point de fusion de la résine polyester aliphatique cristalline, (2) étant présent en quantité de 10 à 200 parties en poids pour 10 parties en poids du poids total de la résine polyester aliphatique cristalline et du plastifiant, et (3) comprenant un solvant à base de cétone, laquelle composition de résine polyester aliphatique est à l'état de solution.

2. Composition de résine polyester aliphatique selon la revendication 1, dans laquelle la résine polyester aliphatique cristalline est un poly(acide lactique).

3. Composition de résine polyester aliphatique selon la revendication 1, dans laquelle le plastifiant possède un point de transition vitreuse inférieur ou égal à 25°C et une masse molaire de 10 000 à 1 000 000.

4. Composition de résine polyester aliphatique selon la revendication 1, dans laquelle le plastifiant possède une masse molaire de 100 à 1 000.

5. Composition de résine polyester aliphatique selon la revendication 1, dans laquelle le plastifiant est présent en quantité de 5 à 100 parties en poids pour 100 parties en poids de la résine polyester aliphatique cristalline.

6. Composition de résine polyester aliphatique selon la revendication 1, dans laquelle le solvant est la 2-butanone ou la cyclopentanone.

7. Composition de résine polyester aliphatique selon la revendication 1, dans laquelle la résine polyester aliphatique cristalline possède une masse molaire moyenne en poids de 90 000 à 500 000.

8. Procédé pour former un article façonné possédant un module de 1x10⁶ à 1x10⁹ Pa à une température de 25°C à 100°C, mesuré selon JIS K-7233-4, et un indice d'opalescence inférieur ou égal à 20%, mesuré selon JIS K-7105, ledit procédé comprenant les étapes consistant à :
- préparer une composition de résine polyester aliphatique comprenant :
(A)une résine polyester aliphatique cristalline possédant un point de fusion de 100°C à 180°C, qui est dérivée d'un acide hydroxycarboxylique aliphatique asymétrique contenant au moins 90,5% en poids d'un énantiomère de forme L ou d'un énantiomère de forme D de l'acide,
(B)un plastifiant choisi dans le groupe constitué par les dérivés de glycol, les dérivés de glycérine, les dérivés d'acide phtalique, les dérivés d'acide adipique, les dérivés d'acide azélaïque, les dérivés d'acide sébacique, les dérivés d'acide maléique, les dérivés d'acide fumarique, les dérivés d'acide tri-mellitique, les dérivés d'acide citrique, les dérivés d'acide gras, les dérivés d'acide sulfonique, les dérivés d'acide phosphorique, les dérivés de paraffine, les dérivés de diphényle, les dérivés d'époxy et les polyesters aliphatiques, et
(C)un solvant dans lequel la résine polyester aliphatique cristalline et le plastifiant présentent une solubilité, le solvant (1) possédant un point d'ébullition inférieur au point de fusion de la résine polyester aliphatique cristalline, (2) étant présent en quantité de 10 à 200 parties en poids pour 10 parties en poids du poids total de la résine polyester aliphatique cristalline et du plastifiant, et (3) comprenant un solvant à base de cétone ; et
- façonner la composition, l'étape de façonnage comprenant un moulage par injection, un moulage par extrusion-soufflage, un moulage par extrusion-soufflage sur forme, un moulage par injection-soufflage, un moulage par injection-soufflage sur forme, un moulage thermique, un moulage par compression, un moulage par gonflage, un moulage par filière en T, ou l'application de la composition sur un substrat et le séchage de la solution.

9. Procédé selon la revendication 8, dans lequel l'étape de façonnage consiste à éliminer au moins une partie du solvant en séchant la composition.

10. Procédé selon la revendication 8, dans lequel l'étape de façonnage comprend une étape d'extrusion.
